# EUROPEAN PATENT SPECIFICATION

(11) **EP 3 619 283 B1**
(45) Date of publication and mention of the grant of the patent: **27.12.2023**
(21) Application number: 18711596.9
(22) Date of filing: 23.03.2018
(51) Int. Cl.: C10B 49/02, C10B 53/02, C10B 1/10

(54) **CARBONIZATION AND ACTIVATION OF MDF**
VERKOHLUNG UND AKTIVIERUNG VON MDF
CARBONISATION ET ACTIVATION D'UN MATÉRIAU CONTENANT DU MDF

(30) Priority: 23.03.2017 EP 17162615
(43) Date of publication of application: 11.03.2020
(73) Proprietor: Act&Sorb, 3600 Genk (BE)
(72) Inventor: VANREPPELEN, Kenny, 3500 Hasselt (BE)
(74) Representative: Forresters IP LLP
(86) International application number: PCT/EP2018/057514
(87) International publication number: WO 2018/172541

(56) References cited:
- WO-A1-01/68789
- JP-A- 2009 179 485
- US-A1- 2004 005 461
- US-A1- 2004 111 968
- US-A1- 2013 256 113
- US-A1- 2015 329 365
- VASSILEV S V ET AL: "An overview of the chemical composition of biomass", FUEL, IPC SIENCE AND TECHNOLOGY PRESS , GUILDFORD, GB, vol. 89, no. 5, 1 May 2010 (2010-05-01), pages 913-933, XP026930458, ISSN: 0016-2361, DOI: 10.1016/J.FUEL.2009.10.022 [retrieved on 2009-11-10]
- GRIGSBY WARREN J. ET AL: "Labile Extractable Urea-Formaldehyde Resin Components from Medium-Density Fiberboard*", FOREST PRODUCTS JOURNAL., vol. 65, no. 1-2, 1 March 2015 (2015-03-01), pages 15-19, XP93012035, US ISSN: 0015-7473, DOI: 10.13073/FPJ-D-14-00030 Retrieved from the Internet: URL:https://watermark.silverchair.com/fpj- d-14-00030.pdf?token=AQECAHi208BE49Ooan9kk hW_Ercy7Dm3ZL_9Cf3qfKAc485ysgAAAr8wggK7Bgk qhkiG9w0BBwagggKsMIICqAIBADCCAqEGCSqGSIb3D QEHATAeBglghkgBZQMEAS4wEQQMn6ioP1Zsaoai60v xAgEQgIICcsnhEhIrNvvxKVYJWUgX6f0btX09ED-KT w998oRTZ78SdhgzrRHnstmn6y0tXEoqb3OJ7G3dLSZ 8s21CAdvh2>
- WU YU ET AL: "Characteristics of nitrogen-enriched activated carbon prepared from waste medium density fiberboard by potassium hydroxide", JOURNAL OF WOOD SCIENCE, SPRINGER SINGAPORE, SINGAPORE, vol. 59, no. 2, 18 November 2012 (2012-11-18), pages 133-140, XP036681834, ISSN: 1435-0211, DOI: 10.1007/S10086-012-1312-4 [retrieved on 2012-11-18]

## Description

### Field of the Invention

The present invention generally relates to a process for manufacturing char.

### Background of the Invention

Activated carbon or activated charcoal is a form of carbon with a high degree of porosity thereby exceeding a surface area of 500 square metre per gram of activated carbon. Activated carbon can be made from materials that comprise a high degree of carbon such as for example from coconut husk, wood, coal, petroleum etc. The process for making the activated carbon comprises two steps, a pyrolysis or carbonization step and an activation step. During the carbonization step the carbon containing starting material is heated to temperatures between 500 and 800 degrees Celsius in an oxygen deficient atmosphere. During this step a gaseous and a solid output stream is obtained. The gaseous stream comprises light gasses and tar and the solid material comprises char and solid by-products such as ashes. During the second activation step, the surface area of the char is greatly increased. Activation may for example be done by overheated steam at a temperature of at least 800 degrees Celsius. Activation may also be done by chemical activation at lower temperatures.

An issue that typically occurs is the treatment of the gaseous output stream. First of all, the tar in the output stream will condensate upon cooldown of the gas into tar which can cause clogging in the gas extraction path of the oven. Second, the input material typically comprises an amount of nitrogen that is converted during the carbonization and activation and released as nitrogen-containing volatiles including nitrogen oxides (NOₓ) precursor gasses such as ammonia, hydrogen cyanide, isocyanic acid and nitrogen oxides; and toxic contaminants like organic nitrogenated compounds which are all highly undesirable from an ecological point of view.

WO 01/68789 A1 relates to a staged gasification process and system for thermal gasification of special waste fractions and biomass.

US 2013/256113 A1 relates to a modular plant, including at least one basic module suitable for converting carbonaceous matrices into fuel or useful products.

WU YU et al: "Characteristics of nitrogen-enriched activated carbon prepared from waste medium density fiberboard by potassium hydroxide", JOURNAL OF WOOD SCIENCE, SPRINGER SINGAPORE, SINGAPORE, vol. 59, no. 2, 18 November 2012 (2012-11-18), pages 133-140, XP036681834, ISSN: 1435-0211, DO1: 10.1007/S10086-012-1312-4 relates to characteristics of activated carbon.

### Summary of the Invention

The invention is as set out in the claims. Any embodiments not falling within the scope of the claims is included for illustrative purposes only.

In particular, the invention is as set out below:
Process for manufacturing char from MDF (120); the process comprising the following steps:
providing MDF (120) to a first furnace (102);
carbonizing MDF (120) in the first furnace (102) by pyrolysis to obtain an intermediate product (121) comprising char and a waste gas (130), wherein the waste gas (130) comprises nitrogen-containing components;
piling the char of the intermediate product (121) in a pile in front of a through-hole (108) in the first furnace (102);
evacuating the waste gas (130) from the first furnace (102) by first forcing the waste gas (130) through the char of the intermediate product (121) thereby:
   obtaining a solid-gas reaction between the nitrogen in the waste gas (130) and the char of the intermediate product (121);
   by the solid-gas reaction, loading the char of the intermediate product (121) with the nitrogen to obtain a char containing output product (122, 170) that comprises at least 15 % of the nitrogen that was present in the MDF (120);
   by the solid-gas reaction, cracking molecules in the waste gas (130) thereby obtaining an output waste gas (131); and
evacuating the output waste gas (131) from the first furnace (102);
obtaining the char containing output product (122, 170) from the first furnace (102).

It is an object of the present invention to solve the above problems and to provide a solution for making char and activated carbon with cleaner output gasses, i.e., gasses comprising less tar and less nitrogen oxides.

According to a first aspect, this object is achieved by a process for manufacturing char from MDF as defined in claim 1.

In other words, when the input product is cracked into a solid phase comprising the char and a gaseous phase, this gaseous phase or waste gas is not directly extracted from the furnace, but forced again through the intermediate product. By this forced evacuation, contact between the hot waste gas and the char is achieved which results in a solid-gas reaction between the hot waste gas and the hot char within the intermediate product. By this reaction, the complex organic molecules in the waste gas are further cracked into smaller molecules thereby reducing the amount of tar. It is thus an advantage that a waste gas is obtained with less complex organic molecules when compared with the waste gas before the reaction. The waste gas resulting from the above process is thus much cleaner than from the processes as known from the art.

Char should be understood as the solid material obtained from the carbonisation of organic material, i.e., by the thermo-chemical conversion in an oxygen-limited environment of the organic material. Char typically comprises at least 50% in weight of carbon to be considered as char. Char further has a typical surface area between 1 m²/g to 1000m²/g.

Summarized, before evacuating the output waste gas from the furnace the following steps are performed by the above process:
- obtaining a solid-gas reaction between the waste gas and the char of the intermediate product, and
- by the solid-gas reaction, cracking molecules in the waste gas thereby obtaining an output waste gas.

Advantageously, the input product comprises at least 50% in weight of carbon.

Moreover, the input product comprises nitrogen, and the waste gas also comprises nitrogen containing components. By the evacuating according to the above process, the following steps are performed:
- obtaining a solid-gas reaction between the nitrogen in the waste gas and the intermediate product; and
- by the solid-gas reaction, loading the intermediate product with the nitrogen thereby obtaining the output product that further comprises the nitrogen.

The char in the intermediate product will thus be loaded with the nitrogen from the waste gas, i.e., the nitrogen is encapsulated into the porous char. It is thus an advantage that the resulting waste gas will have a lower fraction of nitrogen oxides.

Moreover, by selecting the amount of nitrogen in the input product, the amount of loading of nitrogen can be selected. Activated carbon that is loaded with nitrogen is an end product where there is a demand for in today's industry because the nitrogen improves the absorption characteristics of the activated carbon for some components. Therefore, it is an advantage that, by the above process, char can be obtained that is loaded with nitrogen while have a waste gas with less nitrogen oxides. For example, an input product with at least 2% in weight of nitrogen is already sufficient for obtaining nitrogen loaded char.

For loading char with nitrogen, the input material is Medium-density fibreboard (MDF). The nitrogen is then obtained from the glue and resins in the MDF, e.g. ureaformaldehyde, urea-melamine-formaldehyde, melamine-formaldehyde. It is thus an advantage that from MDF waste material, a nitrogen loaded char is obtained with cleaner waste gasses.

The process according to the present invention is further characterized in that it comprises the step of piling up the intermediate product in a pile in the furnace and evacuating the waste gas through the pile. In particular, the intermediate product is piled up in front of a through-hole in the furnace and the at least part of the evacuated waste gas is forced through the piled up intermediate product

The process for manufacturing char from MDF is defined in claim 1. Said process is typically characterized in that all steps, including carbonizing the input product, piling-up the intermediate product and forcing the at least part of the waste gas through the intermediate product, take place in the same furnace, which results in a compact and economically interesting system.

Typical carbonization processes spread the input product in a thin layer or bed in order to make the carbonization as efficient as possible, i.e., such that the waste gas can be quickly separated in order to obtain the intermediate product comprising the char. While the formation of such a thin layer is advantageous for the pyrolysis, it is less advantageous for the further solid-gas reaction between the waste-gas and the intermediate product. Therefore, by creating a pile of the intermediate product, the waste gas will make a better contact with the char in the intermediate product thereby improving the cracking process. Piling up should be understood as enlarging the cross-section of the intermediate product in a plane perpendicular to the moving direction from the input product towards the intermediate product.

According to an embodiment, the input product is obtained from an input feed at a first end of the furnace and the output product is obtained from an output feed at a second end of the furnace; and wherein the waste gas is extracted at the second end.

As the intermediate product and thus also the output product is collected at the second end of the surface, also the extraction is done near this second end. Contrary to some processes as known in the art, the waste gas is thus not evacuated at the input end.

According to a further embodiment the process further comprises:
- during the pyrolysis, transferring the input product from the input feed towards the output feed of the furnace while it is processed into the intermediate product; and
- before the output feed, piling up the intermediate product in front of a through-hole arranged between the intermediate product and the output feed; and wherein the cross-section of the through-hole is such that the pile covers the through-hole; and
- evacuating the waste gas through the through-hole such that it is forced through the pile; and
- collecting the output product at the output feed after transfer through the through-hole.

The process is thus a continuous process wherein the input product undergoes the pyrolysis while being transported from the input feed towards the output feed. When the product reaches the output feed, it is transformed into the intermediate product. The piling up of the intermediate product is then achieved by hindering the transfer of the intermediate product to the output end. The hindering is done by narrowing the passage of the intermediate product, i.e., by forcing it through a narrow section or a through hole. It is just before this narrow section that the waste gas is forced through the intermediate product in order to obtain the output product and then evacuated at the second end. A through-hole is thus to be understood as a narrowing of the passage from the input feed to the output feed in order to cause a piling up of the intermediate product.

It is an advantage that with this arrangement the invention can be applied to an existing pyrolysis process, either by retrofitting it into existing systems or by incorporating it into new designs.

More advantageously, the furnace is a rotary kiln furnace.

According to an embodiment, the process further comprises burning at least part of the waste gas and performing the carbonizing by at least part of the heat produced by the burning.

Additionally as defined further in the dependent claims, according to a second aspect the process may further comprise
- providing a starting product comprising char to a second furnace; and
- activating the starting product in the second furnace thereby obtaining an intermediate product comprising activated carbon and waste gas;
- evacuating at least part of the waste gas from the second furnace by first forcing the at least part of the waste gas through the intermediate product thereby obtaining an output product comprising the activated carbon;
- obtaining the output product from the second furnace.

According to the present invention, the starting product is the output product of the process according to the first aspect of the present invention.

In other words, the starting product for the process for manufacturing activated carbon according to said second aspect of the present invention is the output product of the process according to the first aspect of the invention.

In a further preferred embodiment, said starting product being the output product of the process according to the first aspect of the present invention first undergoes a forming step wherein said output product, in particular char, is converted towards powder or pellets using techniques such as milling, sieving, extrusion, or coagulation.

Further, all the process steps performed according to the first aspect, are also applicable during activation of the char into activated carbon and will exhibit the same advantages as mentioned under the first aspect.

According to an embodiment, the activating is performed by an oxidizing gas and the evacuating further comprises forcing at least a part of the oxidizing gas through the intermediate product. This will result in a better contact between the intermediate product and the oxidizing gas which further results in a better activation of the carbon. The oxidizing gas may for example comprise overheated steam, carbon oxide (CO) and/or carbon dioxide (CO₂).

Summarized, before evacuating the output waste gas from the second furnace the following steps are performed by the above process according to the second aspect:
- obtaining a solid-gas reaction between the waste gas and the activated carbon and/or between the oxidizing gas and the activated carbon in the intermediate product, and
- by the solid-gas reaction, cracking molecules in the waste gas thereby obtaining an output waste gas.

Moreover, as the starting product comprises nitrogen, the waste gas will also comprise nitrogen containing components. By the evacuating according to the process according to the second aspect, the following steps will be performed:
- obtaining a solid-gas reaction between the nitrogen in the waste gas and the intermediate product; and
- by the solid-gas reaction, loading the intermediate product with the nitrogen thereby obtaining the output product that further comprises the activated carbon loaded with the nitrogen.

The activated carbon in the output product will thus be loaded with the nitrogen from the waste gas, i.e., the nitrogen is encapsulated into the pores and on the surface of the activated carbon. It is thus an advantage that the resulting waste gas will have a lower fraction of nitrogen oxides.

Moreover, by selecting the amount of nitrogen in the starting product, the amount of loading of nitrogen can be selected. Therefore, it is an advantage that, by the above process, activated carbon can be obtained that is loaded with nitrogen while having a waste gas with less nitrogen oxides.

According to an embodiment, the process comprises the step of piling up the intermediate product in a pile in the second furnace and evacuating the waste gas through the pile.

According to an embodiment, the starting product is obtained from an input feed at a first end of the furnace and the output product is obtained from an output feed at a second end of the furnace; and wherein the waste gas is extracted at the second end.

According to a further embodiment the process according to the second aspect further comprises:
- during the activation, transferring the starting product from the input feed towards the output feed of the furnace while it is processed into the intermediate product; and
- before the output feed, piling up the intermediate product in front of a through-hole arranged between the intermediate product and the output feed; and wherein the cross-section of the through-hole is such that the pile covers the through-hole; and
- evacuating the waste gas through the through-hole such that it is forced through the pile; and
- collecting the output product at the output feed after transfer through the through-hole.

More advantageously, the second furnace is a rotary kiln furnace.

According to an embodiment, the process further comprises burning at least part of the waste gas and performing the activation by at least part of the heat produced by the burning.

In the activation process according to this second aspect of the present invention, the piling-up will result in a better and faster activation of the product. In other words, the activation gas will make a better contact with the product thereby increasing the pore formation. This in combination with the evacuated gasses and molecules that react in the soli-gas reaction improves the cracking. Furthermore, during said process, contact between the oxidizing gas and the intermediate product is improved thereby increasing the reaction and decreasing the reaction time and the amount of oxidizing gas needed. In addition, the volatized nitrogen gases will react with the activated carbon leading to incorporation of part of said gases in the activated carbon. Due to the reaction between the volatised organic molecules with the carbon of the activated carbon, a cleaner syngas or waste gas is produced with reduced nitrogen oxide levels.

According to a third aspect not according to the claimed invention, the third aspect relates to a device for manufacturing char from an input product comprising carbon; the device comprising:
- an input feed for providing the input product into a furnace; and
- an output feed for obtaining an output product comprising the char from the furnace; and
- the furnace arranged to carbonize the input product by pyrolysis into an intermediate product comprising char and into waste gas;
- gas extraction means arranged to extract the waste gas from the furnace through the intermediate product thereby obtaining the output material comprising the char.

Summarized, before evacuating the output waste gas from the furnace the following steps are implicitly performed by the device according to the third aspect, i.e., the device is arranged to:
- obtain a solid-gas reaction between the waste gas and the char of the intermediate product, and
- by the solid-gas reaction, crack molecules in the waste gas thereby obtaining an output waste gas.

Moreover, when the input product comprises nitrogen, the waste gas will also comprise nitrogen containing components. When performing the evacuating by the device according to the third aspect, the following steps will be implicitly performed:
- obtaining a solid-gas reaction between the nitrogen in the waste gas and the intermediate product; and
- by the solid-gas reaction, loading the intermediate product with the nitrogen thereby obtaining the output product that further comprises the nitrogen.

According to an embodiment not according to the claimed invention, the device is further arranged to pile up the intermediate product in a pile in the furnace and to evacuate the waste gas through the pile.

According to an embodiment not according to the claimed invention, the input feed of the device is arranged at a first end of the furnace and the output feed is arranged at a second end of the furnace. The gas extraction means is then arranged to extract the waste gas at the second end.

According to a further embodiment not according to the claimed invention the device further comprises:
- transferring means arranged in the furnace for transferring the input product from the input feed towards the output feed of the furnace during the pyrolysis while it is processed into the intermediate product; and
- a through-hole arranged between the intermediate product and the output feed such that the intermediate product piles up in front of the through-hole and such that the pile covers the through-hole;
and wherein the evacuating means are further configured to evacuate the waste gas through the through-hole such that it is forced through the pile and to collect the output product at the output feed after transfer through the through-hole.

Advantageously, the furnace is a rotary kiln furnace.

According to an embodiment not according to the claimed invention, the device further comprises a heater for burning at least part of the waste gas and performing the carbonizing by at least part of the heat produced by the burning.

According to a fourth aspect not according to the claimed invention, the fourth aspect relates to a device for manufacturing activated carbon from a starting product comprising char; the device comprising:
- an input feed for providing the starting product into a furnace; and
- an output feed for obtaining an output product comprising the activated carbon from the furnace; and
- the furnace arranged to activate the starting product into an intermediate product comprising activated carbon and into waste gas;
- gas extraction means arranged to extract the waste gas from the furnace through the intermediate product thereby obtaining the output material comprising the activated carbon.

According to an embodiment not according to the claimed invention, the device further comprises a second input feed for providing an oxidizing gas to the furnace. The gas extraction means is then further arranged to extract at least part of the oxidizing gas from the furnace through the intermediate product. The oxidizing gas may for example comprise overheated steam, carbon oxide (CO) and/or carbon dioxide (CO₂).

Summarized, before evacuating the output waste gas from the furnace the following steps are implicitly performed by the device according to the fourth aspect, i.e., the device is arranged to:
- obtain a solid-gas reaction between the waste gas and the activated carbon or between the oxidizing gas and the activated carbon in the intermediate product, and
- by the solid-gas reaction, crack molecules in the waste gas thereby obtaining an output waste gas.

Moreover, when the starting product comprises nitrogen, the waste gas will also comprise nitrogen containing components. When performing the evacuating by the device according to the fourth aspect, the following steps will be implicitly performed:
- obtaining a solid-gas reaction between the nitrogen in the waste gas and the intermediate product; and
- by the solid-gas reaction, loading the intermediate product with the nitrogen thereby obtaining the output product that further comprises the nitrogen as activated carbon loaded with nitrogen.

According to an embodiment not according to the claimed invention, the device according to the fourth aspect is further arranged to pile up the intermediate product in a pile in the furnace and to evacuate the waste gas through the pile.

According to an embodiment not according to the claimed invention, the input feed of the device is arranged at a first end of the furnace and the output feed is arranged at a second end of the furnace. The gas extraction means is then arranged to extract the waste gas at the second end.

According to a further embodiment not according to the claimed invention, the device according to the fourth aspect further comprises:
- transferring means arranged in the furnace for transferring the starting product from the input feed towards the output feed of the furnace during the pyrolysis while it is processed into the intermediate product; and
- a through-hole arranged between the intermediate product and the output feed such that the intermediate product piles up in front of the through-hole and such that the pile covers the through-hole;
and wherein the evacuating means are further configured to evacuate the waste gas through the through-hole such that it is forced through the pile and to collect the output product at the output feed after transfer through the through-hole.

Advantageously, the furnace is a rotary kiln furnace.

According to an embodiment not according to the claimed invention, the device further comprises a heater for burning at least part of the waste gas and performing the activation by at least part of the heat produced by the burning.

According to a fifth embodiment not according to the claimed invention, the fifth embodiment not according to the claimed invention relates to a system for manufacturing activated carbon from an input product comprising carbon, the system comprising:
- the device according to the third aspect arranged to manufacture char from the input product comprising the carbon; and
- the device according to the fourth aspect arranged to take the char from the device according to the third aspect as starting product and to manufacture therefrom activated carbon.

### Brief Description of the Drawings

Fig. 1 illustrates a system for manufacturing activated carbon from a carbon containing input material according to an embodiment of the invention; and
Fig. 2 illustrates a system for manufacturing activated carbon from a carbon containing input material according to a second embodiment of the invention.

### Detailed Description of Embodiment(s)

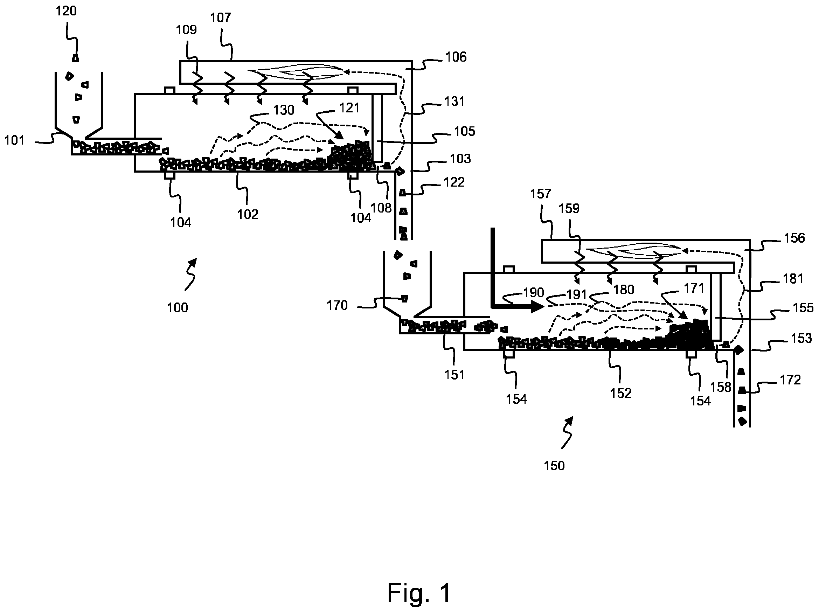

Fig. 1 illustrates a system (100 and 150) for manufacturing activated carbon 172 from a carbon containing input material 120. The system comprises a first device 100 for manufacturing char 122, 170 from the input material 120 according to a first manufacturing process and a second device 150 for manufacturing activated carbon 172 from the char 122, 170 according to a second subsequent manufacturing process. The two devices may further be used separately, i.e., for making char or for making activated carbon from the char.

The carbon containing input material 120 is MDF. MDF is well known in the art and advantageously contains at least 50% by weight of carbon. MDF has a high amount of nitrogen (N) ranging up to 60 % in weight. By the manufacturing processes in devices 100, 150 the resulting char and activated carbon will be loaded with the nitrogen from the input material, i.e., the nitrogen will be captured and/or bonded with and/or to the pores and surface in the char 122, 170 and the activated carbon 172. Therefore, waste gasses 131, 181 produced by the devices 100, 150 will contain much less nitrogen-containing volatiles as devices according to the state of the art.

In device 100, a continuous carbonization process is performed. The process starts at an input feed 101 by which the carbon containing input material 120 is provided to a furnace 102 at a first end, i.e., at the input end. In the furnace 102, the input material is heated in an oxygen deficient atmosphere such that the carbon containing input material is carbonized into an intermediate product 121 that comprises char. Depending on the purity of the input material 120, the intermediate material may also comprise some degree of by-products such as ashes. Preferably, the temperature during carbonization is at least 500 degrees Celsius; more preferably, the temperature is between 500 degrees Celsius and 800 degrees Celsius; even more preferably between 600 degrees Celsius and 800 degrees Celsius.

Advantageously, the furnace is a rotary kiln. The furnace is then in the form of a cylindrical vessel 102 wherein the input feed 101 is located at the input side of the vessel. The vessel 102 is rotatable on a plurality of rollers 104 or any other suitable suspension system and arranged such that the input material 120 continuously moves from the input end of the vessel 102 towards the output feed 103 located at the output end. The moving of material may be established by a spiral shaped wall arranged inside the vessel or by a small inclination of the vessel, e.g., ranging from 0.5 degrees to 3 degrees. By the rotation of the furnace 102, e.g., at about 1 to 10 rotations per minute, the input material 120 will then continuously move towards the output end while being converted into the intermediate material 121 containing the char.

Heating of the furnace or vessel 102 may be done directly or indirectly. In Fig. 1 an indirect heat transfer 109 from a heater 107 is shown. In such a case, the creation of the heat is done outside the furnace 102 and the heat is then transferred through the wall of the furnace into the furnace. In such case, the heater is typically arranged around the complete circumference of the furnace in order to achieve an evenly distributed temperature in the oven. Alternatively, the heating may also be done directly, i.e., by creating the heat inside the furnace 102 for example by burning of a gas. In such a case the gas will be supplied by a burner-pipe (not shown). As the carbonization is done in an oxygen deficient atmosphere, also an oxidizer such as oxygen (O₂) for oxidizing the gas will be supplied into the furnace 102 thereby generating heat inside the furnace 102.

Besides the conversion into a solid-state intermediate material 121, the carbonization also generates a gaseous output stream in the form of waste gas 130. The waste gas 130 contains tar and volatile organic compounds including nitrogen oxides (NOx) precursor gasses. In order to evacuate the waste gas 130, the device 100 comprises an evacuation system 106. The evacuation system 106 is arranged near the output feed 103, i.e., at the output end of the furnace 102, such that the waste gasses 130 will travel towards the output end of the furnace 102. The evacuation system 106 is also arranged such that the waste gas 130 is first forced into and through the intermediate product 121 and thus into the char located near the output feed 103 of the furnace. By this forced evacuation, contact between the hot waste gas 130 and the char is achieved which results in a solid-gas reaction between the hot waste gas and the hot char within the intermediate product 121. By this reaction, the complex organic molecules in the waste gas are further cracked into smaller molecules thereby reducing the amount of tar and complex molecules. After going through the intermediate product 121, the output waste gas 131 is evacuated from the furnace 102. Because of the cracking, the output waste gas 131 will contain less complex organic molecules in comparison to the waste gas 130 before the solid-gas reaction. In a similar way, a solid-gas reaction will occur with the nitrogen oxides precursor gasses in the waste gas 130. During the reaction, the intermediate product 121 will be loaded with the nitrogen from the waste gas, i.e., the nitrogen is encapsulated into the pores and onto the surface of the char in the intermediate product 121. After the forced evacuation, the char is released from the furnace 102 as output product 122. If needed, further by-products such as ashes may be separated before supplying the output product 122 to the next device 150 for activation of the char.

Advantageously, the forced evacuation of the waste gas 130 is performed by piling up the intermediate product 121 before the output feed 103. In order to achieve this, a blocking element 105 is arranged at the end of the furnace, just before the output feed 103. The blocking element 105 is arranged such that the exit of the moving intermediate product 121 is partially blocked and the intermediate product 121 forms a heap just before the blocking element 105. The partial blocking may be done be a narrow section 108, further referred to as through-hole 108, in the blocking element 105. The diameter of the through-hole will depend on the throughput speed of the intermediate product 121 in the furnace 102. The blocking element is thus arranged such that the waste gas 130 can only exit the furnace 102 through the intermediate product 121 by the through-hole. This ensures that solid-gas reaction between the intermediate product 121 and the waste gas 130 is assured. In order to force the waste gas 130 through the through-hole a pressure difference may be created between the evacuation system 106 and the furnace 102 such that a suction effect is created thereby forcing the waste gas 130 passed the blocking element 105 and thus through the intermediate product 121.

The output waste gas 131 may then further be recuperated as fuel gas in a burner 107 that supplies its heat 109 back to the furnace 102.

System 100-150 further comprises a second device 150 for activating the char 170 that is obtained from the first device 100 to activated carbon 172. The principle of device 150 is largely similar to that of device 100. Device 150 comprises an input feed 151 similar to that of 101. The char 170 from device 100 is collected in the input feed 151 and provided by the input feed 151 to the furnace 152. Furnace 152 is arranged for activation of the char 151 by an oxidizing gaseous stream 191 comprising for example steam, carbon oxide or carbon dioxide. To this purpose, device 152 comprises an input pipe 190 for injection of the oxidizer 191 into the furnace 152.

For achieving the activation, the input char product 170 is further heated to temperatures of at least 800 degrees Celsius, preferably at least 900 degrees Celsius, more preferably at least 950 degrees Celsius and may even go up to 1100 degrees Celsius. The furnace 152 may be heated directly or indirectly. In Fig. 1 an indirect heat transfer 159 from a heater 157 is shown. In such a case, the creation of the heat is done outside the furnace 152 and the heat is then transferred through the wall of the furnace into the furnace 152. In such case, the heater is typically arranged around the complete circumference of the furnace in order to achieve an evenly distributed temperature in the oven. Alternatively, the heating may also be done directly, i.e., by creating the heat inside the furnace 152 for example by burning a gas. In such a case the gas will be supplied by a burner-pipe (not shown). Also an oxidizer such as oxygen (O₂) for oxidizing the gas may be supplied into the furnace 152 thereby generating the heat inside the furnace 152

Similar to furnace 102, furnace 152 may be a rotary kiln. The furnace is then in the form of a cylindrical vessel 152 wherein the input feed 151 is located at the input side of the vessel. The vessel 152 is rotatable on a plurality of rollers 154 or any other suitable suspension system and arranged such that the input material 170 continuously moves from the input end 151 of the vessel 152 towards the output feed 153 located at the output end. The moving of material may be established by a spiral shaped wall arranged inside the vessel or by a small inclination of the vessel, e.g., ranging from 0.5 degrees to 3 degrees. By the rotation of the furnace 152, e.g., at about 1 to 10 rotations per minute, the input material 170 will then continuously move towards the output end while being converted into the intermediate material 171 containing the activated carbon. The activation is established by an oxidizing reaction between the oxidizer 191 and the input material 151 thereby increasing the surface area of the carbon.

Besides the conversion into a solid-state intermediate material 171, the activation also generates a gaseous output in the form of waste gas 180. The waste gas 180 may again contain tar and volatile organic compounds including nitrogen oxides (NOx) precursor gasses. In order to evacuate the waste gas 180, the device 150 also comprises an evacuation system 156. The evacuation system 156 is arranged near the output feed 153, i.e., at the output end of the furnace 152, such that the waste gasses 180 will travel towards the output end of the furnace 152. The evacuation system 156 is also arranged such that the waste gas 180 is first forced into and through the intermediate product 171 and thus into the activated carbon located near the output feed 153 of the furnace.

By this forced evacuation, contact between the hot waste gas 180 and the intermediate activated carbon 171 is achieved which results in a solid-gas reaction between the hot waste gas and the hot activated carbon within the intermediate product 171. By this reaction, the complex organic molecules in the waste gas are further cracked into smaller molecules thereby reducing the amount of tar and complex molecules. After going through the intermediate product 171, the obtained output waste gas 181 is evacuated from the furnace 151. Because of the cracking, the output waste gas 181 will contain less complex organic molecules when compared with the waste gas 180 before the solid-gas reaction. In a similar way, a solid-gas reaction will occur with the nitrogen oxides precursor gasses in the waste gas 180. During the reaction, the intermediate product 171 will be loaded with the nitrogen from the waste gas, i.e., the nitrogen is encapsulated into the pores and on the surface of the activated carbon in the intermediate product 171. After the forced evacuation, the activated carbon is released from the furnace 151 as output product 172.

The same evacuation may also be done with the oxidizer 191 that is used for the activation. In a conventional rotary kiln or activation reactor, the activation will occur by a superficial solid-gas reaction between the char 151 and the oxidizing gas 191. Upon rotation of the furnace 152, the contact between the char 151 and the oxidizing gas 191 is further increased. However, the contact and thus also the activation is only achieved on the surface of the product stream. By also evacuating the oxidizer 191 together with the waste gas 180, the oxidizer is brought in further contact with the intermediate product 171. As the oxidizing gas is forced through the intermediate product 171, the solid-gas reaction between the oxidizer and the carbon will not only occur on the surface of the product stream and pile, but also with the product that is beneath the surface. Therefore, the forced evacuation of the oxidizer 191 through the intermediate product will lead to a better activation of the carbon and thus to an activated carbon with an increased surface per unit weight.

Similarly to device 100, the forced evacuation of the waste gas 180 and/or the oxidizer 191 is performed by piling up the intermediate product 171 before the output feed 153. In order to achieve this, a blocking element 155 is arranged at the end of the furnace, just before the output feed 153. The blocking element 155 is arranged such that the exit of the moving intermediate product 171 is partially blocked such the intermediate product 171 forms a heap just before the blocking element. The partial blocking may be done be a narrow section 158, further referred to as through-hole 158, in the blocking element 155. The diameter of the through-hole will depend on the throughput speed of the intermediate product 171 in the furnace 152. The blocking element is thus arranged such that the waste gas 180 and/or oxidizer 191 can only exit the furnace 152 through the intermediate product 171by the through-hole 158. This ensures that the solid-gas reaction between the intermediate product 171 and the waste gas 130 and/or oxidizer 191 is assured. In order to force the waste gas 130 and/or oxidizer 191 through the through-hole a pressure difference may be created between the evacuation system 156 and the furnace 152 such that a suction effect is created thereby forcing the waste gas 180 and/or the oxidizer 191 passed the blocking element and thus through the intermediate product 171. The output waste gas 181 may then further be recuperated as fuel gas in a burner 157 that supplies its heat 159 back to the furnace 152.

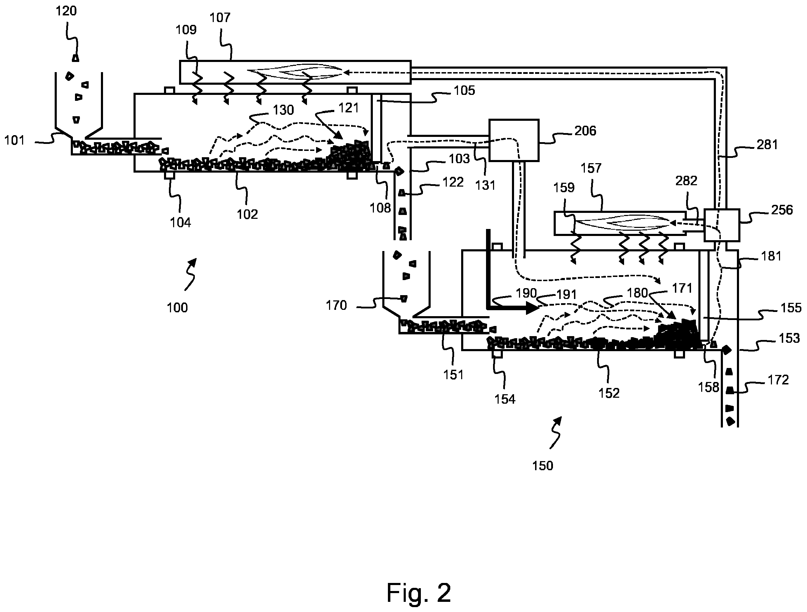

Fig. 2 illustrates an alternative setup of the system of Fig. 1. The difference lays in the setup of the evacuation system 206, 256. Parts of the system that remain unchanged in comparison with Fig. 1 are indicated with the same reference numbers as in Fig. 1. Only the differences will be described below. The system according to fig. 2 comprises a different evacuation system 206 for the evacuation of the output waste gas 131 from the first device 100. Instead of directly supplying the waste gas 131 to the heater 107 as gaseous fuel, the waste gas 131 is extracted by the extraction unit 206 from the first device 100 and supplied to the furnace 152 of the second device 150. The second device 150 on its turn also comprises an evacuation unit 256 which forces the output waste gas 131 from the first device 100 together with part of the oxidizer 191 and the waste gas 180 through the intermediate product 171. The advantage of this setup is that the complex molecules that resided in waste gas 131 are further cracked into even smaller molecules due to the solid-gas reaction inside the intermediate product 171. Furthermore, also nitrogen that was not loaded into the char 170 but resided in waste gas 131, can now be loaded into the activate carbon 171. This way, a higher amount of nitrogen in the activated carbon is obtained. The gaseous output stream 181 is then a result of oxidizer 191, the output waste gas 131 and waste gas 180. Output waste gas 181 may then further be supplied by the extraction unit 256 to the heater 107 and/or to the heater 157 where the gas is burned.

When manufacturing activated carbon by the system according to the above embodiments an overall amount of activated carbon of 10% to 50% of the weight of the input stream 120 can be obtained. The amount of char 170 obtained from the first reactor 100 is in the range of 20% to 90% of weight of the input stream 120. When using MDF as input stream 120, the amount of char 170 formed in the first reactor is in the range of 20% to 30 % of weight of the input stream 120. A preferred duration of the carbonization in the first device 100 is about 30 minutes while the typical preferred duration of the activation in the second device 150 is about 60 minutes. These durations determine other parameters such as the length of the reactor, the feed speed, e.g., 100 to 3000 kg per hour, the rotation of the reactor, e.g., 1 to 10 rotations per minute and the angle under which the reactor can be placed, e.g., 0.5 degrees to 3 degrees. One or more of these parameters can be fixed but other may also be adaptable during the manufacturing process by use of a suitable control system. The porosity quantified by the Iodine number of the active carbon obtained in the output stream 172 is minimum 800-900 mg/g, in particular minimum 900 mg/g. The porosity quantified by the Iodine number of the char 170 obtained in the first device 100 is 150 - 350 mg/g. Therefore, by the activation in device 150, a porosity increase in the second reactor of 157% to 650%, in particular of 228% to 650% can be achieved. When MDF is used as an input stream, the retention of nitrogen is at least 22% to 44%, i.e., at least 22% to 44% of the nitrogen that was present in the input product is retained in the activated carbon.

Although the present invention has been illustrated by reference to specific embodiments, it will be apparent to those skilled in the art that the invention is not limited to the details of the foregoing illustrative embodiments, and that the present invention may be embodied with various changes and modifications. The present embodiments are therefore to be considered in all respects as illustrative and not restrictive, and all changes which come within the meaning of the claims are therefore intended to be embraced therein. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

### EXAMPLES

Pyrolysis and steam activation are executed in an especially designed continuous pilot rotary kiln reactor. The set-up can easily be modified to work with a pile and a throughput hole or without to achieve a classical set-up. Chars are produced by introducing MDF into the warm zone of the reactor at a predetermined temperature between 600 and 800°C. Specific reaction times and movement of material is established by a small inclination of the reactor, e.g., ranging from 0.5 degrees to 3 degrees in combination with rotation of the furnace at about 1 to 10 rotations per minute, the input material (MDF) will continuously move towards the output end while being converted into the intermediate material (Char) in a classical set-up and with the set-up according to the different embodiments of the invention. In both cases, the produced gases are condensed to evaluate the amount of condensable products. The activation of the chars is established by an oxidizing reaction between overheated steam and the chars thereby increasing the surface area of the carbon. Activations are carried out in both set-ups.

Nitrogen-content of MDF, chars and activated carbon is determined in quadruplicated by a Thermo Electron Fleas EA1112 calibrated using BBOT (2,5-Bis (5-tert-butyl-benzoxazol-2-yl) thiophene) as a standard. Performance of the produced activated carbons is tested by Iodine adsorption (iodine number) of the activated carbon, according to the ASTM standard ASTM-D4607-94. In this test, the relative activation level of unused or reactivated carbon by adsorption of iodine from an aqueous solution is measured. The amount of iodine absorbed (in milligrams) by 1 g of carbon using test conditions is called the iodine number (I₂ number).

**Table 1: Comparison between activation of char with a classical layout and with a process according to the present invention.**

| **Test** | **Classical layout** | **With pile and throughput hole** |
|---|---|---|
| **Oil and tar fraction** | 15 - 30 wt% | 0.5 - 10 wt% |
| **N-content MDF** | 4.5 wt% | 4.5 wt% |
| **N-content char** | 2-4 wt% | 4 - 4.5 wt% |
| **N-content activated carbon** | 0 - 1 wt% | 1 - 2 wt% |
| **I₂-number** | 800 - 950 mg/g | 900 - 1150 mg/g |

## Claims

1. Process for manufacturing char from MDF (120); the process comprising the following steps:
- providing MDF (120) to a first furnace (102);
- carbonizing MDF (120) in the first furnace (102) by pyrolysis to obtain an intermediate product (121) comprising char and a waste gas (130), wherein the waste gas (130) comprises nitrogen-containing components;
- piling the char of the intermediate product (121) in a pile in front of a through-hole (108) in the first furnace (102);
- evacuating the waste gas (130) from the first furnace (102) by first forcing the waste gas (130) through the char of the intermediate product (121) thereby:
∘ obtaining a solid-gas reaction between the nitrogen in the waste gas (130) and the char of the intermediate product (121);
∘ by the solid-gas reaction, loading the char of the intermediate product (121) with the nitrogen to obtain a char containing output product (122, 170) that comprises at least 15 % of the nitrogen that was present in the MDF (120);
∘ by the solid-gas reaction, cracking molecules in the waste gas (130) thereby obtaining an output waste gas (131); and
- evacuating the output waste gas (131) from the first furnace (102);
- obtaining the char containing output product (122, 170) from the first furnace (102).

2. Process according to claim 1 wherein the MDF (120) comprises at least 50% in weight of carbon.

3. Process according to any one of the preceding claims wherein the MDF (120) is obtained from an input feed (101) at a first end of the first furnace (102) and the char containing output product (122) is obtained from an output feed (103) at a second end of the first furnace (102); and wherein the waste gas (131) is extracted at the second end; optionally,
wherein the process further comprises:
- during the pyrolysis, transferring the MDF (120) from the input feed (101) towards the output feed (103) of the first furnace (102) while it is processed into the intermediate product (121); and
- before the output feed (103), piling up the char of the intermediate product (121) in front of a through-hole (108) arranged between the char of the intermediate product (121) and the output feed (103); and wherein the cross-section of the through-hole (108) is such that the pile covers the through-hole (108); and
- evacuating the waste gas (130) through the through-hole (108) such that it is forced through the pile; and
- collecting the char containing output product (122) at the output feed (103) after transfer through the through-hole (108).

4. Process according to any one of the preceding claims wherein the first furnace (102) is a rotary kiln furnace (102); and/or,
further comprising burning at least part of the output waste gas (131) and performing the carbonizing by at least part of the heat (109) produced by the burning.

5. The process according to any one of the preceding claims, further comprising the steps of providing the char containing output product (122, 170) to a second furnace (152);
- activating the char containing output product (122, 170) in the second furnace (152) thereby obtaining an intermediate product (171) comprising activated carbon and waste gas (180);
- evacuating at least part of the waste gas (180) from the second furnace (152) by first forcing the at least part of the waste gas (180) through the intermediate product (171) thereby obtaining an activated carbon containing output product (172); and
- obtaining the activated carbon containing output product (172) from the second furnace (152).

6. The process according to claim 5, wherein the evacuating the at least part of the waste gas (180) further comprises:
- obtaining a solid-gas reaction between the waste gas (180) and the intermediate product (171) comprising activated carbon;
- by the solid-gas reaction, cracking molecules in the waste gas (180) thereby obtaining an output waste gas (181); and/or,
wherein the char containing output product (122, 170) comprises nitrogen; and wherein the evacuating the at least part of the waste gas (180) further comprises:
- obtaining a solid-gas reaction between the nitrogen in the waste gas (180) and the intermediate product (171) comprising activated carbon;
- by the solid-gas reaction, loading the intermediate product (171) with nitrogen thereby obtaining the activated carbon containing output product (152) that further comprises the activated carbon loaded with the nitrogen.

7. The process according to anyone of claims 5 or 6, further comprising the step of piling up the intermediate product (171) in a pile in the second furnace (152) and evacuating the waste gas (180) through the pile; and/or,
wherein the char containing output product (122, 170) is obtained from an input feed (151) at a first end of the second furnace (152) and the activated carbon containing output product (172) is obtained from an output feed (153) at a second end of the second furnace (152); and wherein the waste gas (180) is extracted at the second end; optionally,
wherein the process further comprises:
- during the activation, transferring the char containing output product (122, 170) from the input feed (151) towards the output feed (153) of the second furnace (152) while it is processed into the intermediate product (171); and
- before the output feed (153), piling up the intermediate product (171) in front of a through-hole (158) arranged between the intermediate product (171) and the output feed (153); and wherein the cross-section of the through-hole (158) is such that the pile covers the through-hole (158); and
- evacuating the waste gas (180) through the through-hole (158) such that it is forced through the pile; and
- collecting the activated carbon containing output product (172) at the output feed (153) after transfer through the through-hole (158).

8. The process according to anyone of claims 5 to 7 wherein the second furnace (152) is a rotary kiln furnace (152); optionally,
further comprising burning at least part of the output waste gas (181) and performing activation by at least part of the heat (159) produced by the burning.

9. The process according to anyone of claims 1 to 4, wherein the process further comprises a process for manufacturing activated carbon from a char containing output product (122, 170); the process comprising the following steps:
- providing the char containing output product (122, 170) to a second furnace (152);
- activating the char containing output product (122, 170) in the second furnace (152) thereby obtaining an intermediate product (171) comprising activated carbon and waste gas (180);
- evacuating at least part of the waste gas (180) from the second furnace (152) by first forcing the at least part of the waste gas (180) through the intermediate product (171) thereby obtaining an activated carbon containing output product (172); and
- obtaining the activated carbon containing output product (172) from the second furnace (152);
said process **characterized in that**:
- the intermediate product (171) is piled up in a pile in front of a through-hole (158) in the second furnace (152);
- the at least part of the evacuated waste gas (180) is forced through the piled up intermediate product (171); and
- the evacuating the at least part of the waste gas (180) further comprises:
- obtaining a solid-gas reaction between the waste gas (180) and the intermediate product (171) comprising activated carbon;
- by the solid-gad reaction, cracking molecules in the waste gas (180) thereby obtaining an output waste gas (181);
- evacuating the output waste gas (181) from the second furnace (152).

10. The process according to claim 9, wherein the char containing output product (122, 170) comprises nitrogen; and wherein the evacuating the at least part of the waste gas (180) further comprises:
- obtaining a solid-gas reaction between the nitrogen in the waste gas (180) and the intermediate product (171) comprising activated carbon;
- by the solid-gas reaction, loading the intermediate product (171) with nitrogen thereby obtaining the activated carbon containing output product (172) that further comprises the activated carbon loaded with the nitrogen; and/or,
wherein the char containing output product (122, 170) is obtained from an input feed (151) at a first end of the second furnace (152) and the activated carbon containing output product (172) is obtained from an output feed at a second end of the second furnace (152); and wherein the waste gas (180) is extracted at the second end; optionally,
wherein the process further comprises:
- during the activation, transferring the char containing output product (122, 170) from the input feed (151) towards the output feed (153) of the second furnace while it is processed into the intermediate product (171); and
- before the output feed (153), piling up the intermediate product (171) in front of a through-hole (158) arranged between the intermediate product and the output feed (171); and wherein the cross-section of the through-hole (158) is such that the pile covers the through-hole (158); and
- evacuating the waste gas (180) through the through-hole (158) such that it is forced through the pile; and
- collecting the activated carbon containing output product (172) at the output feed after transfer through the through-hole (158).

11. The process according to anyone of claims 9 or 10 wherein the second furnace (152) is a rotary kiln furnace; and/or,
further comprising burning at least part of the waste gas (181) and performing activation by at least part of the heat (159) produced by the burning.

## Patentansprüche

1. Verfahren zur Herstellung von Holzkohle aus MDF (120), wobei das Verfahren die folgenden Schritte beinhaltet:
- Zuführen von MDF (120) zu einem ersten Ofen (102);
- Karbonisieren von MDF (120) in dem ersten Ofen (102) durch Pyrolyse, um ein Zwischenprodukt (121) zu erhalten, das Holzkohle und ein Abgas (130) umfasst, wobei das Abgas (130) stickstoffhaltige Komponenten umfasst;
- Aufhäufen der Holzkohle des Zwischenprodukts (121) in einem Haufen vor einem Durchgangsloch (108) im ersten Ofen (102);
- Evakuieren des Abgases (130) aus dem ersten Ofen (102), indem das Abgas (130) zunächst durch die Holzkohle des Zwischenprodukts (121) gepresst wird, wodurch:
∘ eine Festgasreaktion zwischen dem Stickstoff im Abgas (130) und der Holzkohle des Zwischenprodukts (121) erzielt wird;
∘ durch die Festgasreaktion die Holzkohle des Zwischenprodukts (121) mit dem Stickstoff beladen wird, um ein holzkohlehaltiges Ausgangsprodukt (122, 170) zu erhalten, das mindestens 15 % des Stickstoffs enthält, der in der MDF (120) vorhanden war;
∘ durch die Festgasreaktion Moleküle im Abgas (130) gespalten werden, um dadurch ein Ausgangsabgas (131) zu erhalten; und
- Evakuieren des Ausgangsabgases (131) aus dem ersten Ofen (102);
- Erhalten des holzkohlehaltigen Ausgangsprodukts (122, 170) aus dem ersten Ofen (102).

2. Verfahren nach Anspruch 1, wobei die MDF (120) mindestens 50 Gew.-% Kohlenstoff umfasst.

3. Verfahren nach einem der vorherigen Ansprüche, wobei die MDF (120) aus einem Einlauf (101) an einem ersten Ende des ersten Ofens (102) und das holzkohlehaltige Ausgangsprodukt (122) aus einem Auslauf (103) an einem zweiten Ende des ersten Ofens (102) erhalten wird; und wobei das Abgas (131) am zweiten Ende extrahiert wird;
wobei das Verfahren optional ferner Folgendes beinhaltet:
- Überführen, während der Pyrolyse, der MDF (120) vom Einlauf (101) zum Auslauf (103) des ersten Ofens (102), während sie zu dem Zwischenprodukt (121) verarbeitet wird; und
- Aufhäufen, vor dem Auslauf (103), der Holzkohle des Zwischenprodukts (121) vor einem Durchgangsloch (108), das zwischen der Holzkohle des Zwischenprodukts (121) und dem Auslauf (103) angeordnet ist; und wobei der Querschnitt des Durchgangslochs (108) derart ist, dass der Haufen das Durchgangsloch (108) bedeckt; und
- Evakuieren des Abgases (130) durch das Durchgangsloch (108), so dass es durch den Haufen gepresst wird; und
- Sammeln des holzkohlehaltigen Ausgangsprodukts (122) am Auslauf (103) nach der Überführung durch das Durchgangsloch (108).

4. Verfahren nach einem der vorherigen Ansprüche, wobei der erste Ofen (102) ein Drehrohrofen (102) ist; und/oder
das ferner das Verbrennen mindestens eines Teils des Ausgangsabgases (131) und das Durchführen der Karbonisierung durch mindestens einen Teil der durch die Verbrennung erzeugten Wärme (109) beinhaltet.

5. Verfahren nach einem der vorherigen Ansprüche, das ferner die folgenden Schritte beinhaltet:
Zuführen des holzkohlehaltigen Ausgangsprodukts (122, 170) zu einem zweiten Ofen (152);
- Aktivieren des holzkohlehaltigen Ausgangsprodukts (122, 170) in dem zweiten Ofen (152), wodurch Aktivkohle und Abgas (180) umfassendes Zwischenprodukt (171) erhalten wird;
- Evakuieren mindestens eines Teils des Abgases (180) aus dem zweiten Ofen (152), indem zunächst zumindest ein Teil des Abgases (180) durch das Zwischenprodukt (171) gepresst wird, wodurch ein aktivkohlehaltiges Ausgangsprodukt (172) erhalten wird; und
- Gewinnen des aktivkohlehaltigen Ausgangsprodukts (172) aus dem zweiten Ofen (152).

6. Verfahren nach Anspruch 5, wobei das Evakuieren des mindestens einen Teils des Abgases (180) ferner Folgendes beinhaltet:
- Erzielen einer Festgasreaktion zwischen dem Abgas (180) und dem Aktivkohle umfassenden Zwischenprodukt (171);
- Spalten von Molekülen im Abgas (180) durch die Festgasreaktion, wodurch ein Ausgangsabgas (181) erhalten wird; und/oder
wobei das holzkohlehaltige Ausgangsprodukt (122, 170) Stickstoff umfasst; und
wobei das Evakuieren des mindestens einen Teils des Abgases (180) ferner Folgendes beinhaltet:
- Erzielen einer Festgasreaktion zwischen dem Stickstoff im Abgas (180) und dem Aktivkohle umfassenden Zwischenprodukt (171);
- Beladen des Zwischenprodukts (171) mit Stickstoff durch die Festgasreaktion, wodurch das aktivkohlehaltige Ausgangsprodukt (152) erhalten wird, das ferner die mit dem Stickstoff beladene Aktivkohle umfasst.

7. Verfahren nach Anspruch 5 oder 6, das ferner den Schritt des Aufhäufens des Zwischenprodukts (171) in einem Haufen in dem zweiten Ofen (152) und des Evakuierens des Abgases (180) durch den Haufen beinhaltet; und/oder
wobei das holzkohlehaltige Ausgangsprodukt (122, 170) aus einem Einlauf (151) an einem ersten Ende des Ofens (152) gewonnen wird und das aktivkohlehaltige Ausgangsprodukt (172) aus einem Auslauf (153) an einem zweiten Ende des zweiten Ofens (152) erhalten wird; und wobei das Abgas (180) am zweiten Ende extrahiert wird;
wobei das Verfahren optional ferner Folgendes beinhaltet:
- Überführen, während der Aktivierung, des holzkohlehaltigen Ausgangsprodukts (122, 170) vom Einlauf (151) zum Auslauf (153) des zweiten Ofens (152), während es zu dem Zwischenprodukt (171) verarbeitet wird; und
- Aufhäufen, vor dem Auslauf (153), des Zwischenprodukts (171) vor einem Durchgangsloch (158), das zwischen dem Zwischenprodukt (171) und dem Auslauf (153) angeordnet ist; und wobei der Querschnitt des Durchgangslochs (158) so ist, dass der Haufen das Durchgangsloch (158) bedeckt; und
- Evakuieren des Abgases (180) durch das Durchgangsloch (158), so dass es durch den Haufen gepresst wird; und
- Sammeln des aktivkohlehaltigen Ausgangsprodukts (172) am Auslauf (153) nach der Überführung durch das Durchgangsloch (158).

8. Verfahren nach einem der Ansprüche 5 bis 7, wobei der zweite Ofen (152) ein Drehrohrofen (152) ist; das ferner optional
das Verbrennen mindestens eines Teils des Ausgangsabgases (181) und das Durchführen von Aktivierung durch mindestens einen Teil der durch die Verbrennung erzeugten Wärme (159) beinhaltet.

9. Verfahren nach einem der Ansprüche 1 bis 4, wobei das Verfahren ferner ein Verfahren zur Herstellung von Aktivkohle aus einem holzkohlehaltigen Ausgangsprodukt (122, 170) beinhaltet; wobei das Verfahren die folgenden Schritte beinhaltet:
- Zuführen des holzkohlehaltigen Ausgangsprodukts (122, 170) zu einem zweiten Ofen (152);
- Aktivieren des holzkohlehaltigen Ausgangsprodukts (122, 170) in dem zweiten Ofen (152), wodurch ein Aktivkohle und Abgas (180) umfassendes Zwischenprodukt (171) erhalten wird;
- Evakuieren mindestens eines Teils des Abgases (180) aus dem zweiten Ofen (152), indem zunächst der mindestens eine Teil des Abgases (180) durch das Zwischenprodukt (171) gepresst wird, wodurch ein aktivkohlehaltiges Ausgangsprodukt (172) erhalten wird; und
- Gewinnen des aktivkohlehaltigen Ausgangsprodukts (172) aus dem zweiten Ofen (152);
wobei das genannte Verfahren **dadurch gekennzeichnet ist, dass**:
- das Zwischenprodukt (171) in einem Haufen vor einem Durchgangsloch (158) in dem zweiten Ofen (152) aufgehäuft wird;
- zumindest ein Teil des evakuierten Abgases (180) durch das aufgehäufte Zwischenprodukt (171) gepresst wird; und
- das Evakuieren des mindestens einen Teils des Abgases (180) ferner Folgendes beinhaltet:
- Erzielen einer Festgasreaktion zwischen dem Abgas (180) und dem Aktivkohle umfassenden Zwischenprodukt (171);
- Spalten von Molekülen im Abgas (180) durch die Festgasreaktion, wodurch ein Ausgangsabgas (181) erhalten wird;
- Evakuieren des Ausgangsabgases (181) aus dem zweiten Ofen (152).

10. Verfahren nach Anspruch 9, wobei das holzkohlehaltige Ausgangsprodukt (122, 170) Stickstoff umfasst; und wobei das Evakuieren des mindestens einen Teils des Abgases (180) ferner Folgendes beinhaltet:
- Erzielen einer Festgasreaktion zwischen dem Stickstoff im Abgas (180) und dem Aktivkohle umfassenden Zwischenprodukt (171);
- Beladen des Zwischenprodukts (171) mit Stickstoff durch die Festgasreaktion, wodurch das aktivkohlehaltige Ausgangsprodukt (172) erhalten wird, das ferner die mit dem Stickstoff beladene Aktivkohle umfasst; und/oder
wobei das holzkohlehaltige Ausgangsprodukt (122, 170) aus einem Einlauf (152) an einem ersten Ende des zweiten Ofens (152) erhalten wird und das aktivkohlehaltige Ausgangsprodukt (172) aus einem Auslauf an einem zweiten Ende des zweiten Ofens (152) erhalten wird; und wobei das Abgas (180) am zweiten Ende extrahiert wird;
wobei das Verfahren optional ferner Folgendes beinhaltet:
- Überführen, während der Aktivierung, des holzkohlehaltigen Ausgangsprodukts (122, 170) vom Einlauf (151) zum Auslauf (153) des zweiten Ofens, während es zu dem Zwischenprodukt (171) verarbeitet wird; und
- Aufhäufen, vor dem Auslauf (153), des Zwischenprodukts (171) vor einem Durchgangsloch (158), das zwischen dem Zwischenprodukt und dem Auslauf (171) angeordnet ist; und wobei der Querschnitt des Durchgangslochs (158) so ist, dass der Haufen das Durchgangsloch (158) bedeckt; und
- Evakuieren des Abgases (180) durch das Durchgangsloch (158), so dass es durch den Haufen gepresst wird; und
- Sammeln des aktivkohlehaltigen Ausgangsprodukts (172) am Auslauf nach der Überführung durch das Durchgangsloch (158).

11. Verfahren nach Anspruch 9 oder 10, wobei der zweite Ofen (153) ein Drehrohrofen ist; und/oder
das ferner das Verbrennen mindestens eines Teils des Abgases (181) und das Durchführen von Aktivierung durch mindestens einen Teil der durch die Verbrennung erzeugten Wärme (159) beinhaltet.

## Revendications

1. Procédé de fabrication d'un produit de carbonisation à partir d'un MDF (120) ; le procédé comprenant les étapes suivantes consistant à :
alimenter un premier four (102) en MDF (120) ;
carboniser le MDF (120) dans le premier four (102) par pyrolyse pour obtenir un produit intermédiaire (121) contenant un produit de carbonisation et un gaz résiduaire (130), dans lequel le gaz résiduaire (130) contient des composants azotés ;
amasser le produit de carbonisation du produit intermédiaire (121) en une pile en face d'un trou de passage (108) dans le premier four (102) ;
évacuer le gaz résiduaire (130) du premier four (102) en, en premier lieu, forçant le gaz résiduaire (130) à travers le produit intermédiaire (121), pour ainsi obtenir une réaction solide-gaz entre l'azote dans le gaz résiduaire (130) et le produit de carbonisation du produit intermédiaire (121) ;
sur la base de la réaction solide-gaz, charger le produit de carbonisation du produit intermédiaire (121) avec l'azote pour obtenir un produit de sortie contenant un produit de carbonisation(122, 170) qui comporte au moins 15 % de l'azote que contenait le MDF (120) ;
sur la base de la réaction solide-gaz, briser des molécules dans le gaz résiduaire (130) pour ainsi obtenir un gaz résiduaire de sortie (131) ; et
évacuer le gaz résiduaire de sortie (131) du premier four (102) ;
obtenir le produit de sortie contenant le produit de carbonisation (122, 170) du premier four (102).

2. Procédé selon la revendication 1, dans lequel le MDF (120) comprend au moins 15 % en poids de carbone.

3. Procédé selon l'une quelconque des revendications précédentes, dans lequel le MDF (120) est obtenu à partir d'une alimentation d'entrée (101) à hauteur d'une première extrémité du premier four (102) et le produit de sortie contenant le produit de carbonisation (122) est obtenu à partir d'une alimentation de sortie (103) à hauteur d'une seconde extrémité du premier four (102), et dans lequel le gaz résiduaire (131) est extrait à hauteur de la seconde extrémité ; facultativement,
dans lequel le processus consiste en outre à :
au cours de la pyrolyse, transférer le MDF (120) de l'alimentation d'entrée (101) vers l'alimentation de sortie (103) du premier four (102) lors de sa mise en oeuvre dans le produit intermédiaire (121) ; et
en amont de l'alimentation de sortie (103), amasser le produit de carbonisation du produit intermédiaire (121) en face d'un trou de passage (108) situé entre le produit de carbonisation du produit intermédiaire (121) et l'alimentation de sortie (103) ; et dans lequel la section transversale du trou de passage (108) est configurée de telle sorte que la pile recouvre le trou de passage (108) ; et
évacuer le gaz résiduaire (130) à travers le trou de passage (108) de façon à le faire passer de force à travers la pile ; et
collecter le produit de sortie contenant le produit de carbonisation (122) à hauteur de l'alimentation de sortie (103) suite à son transfert à travers le trou de passage (108).

4. Procédé selon l'une quelconque des revendications précédentes, dans lequel le premier four (102) est un four rotatif (102) ; et/ou,
comprenant en outre la combustion au moins d'une partie du gaz résiduaire de sortie (131) et la réalisation de la carbonisation par au moins une partie de la chaleur (109) que produit la combustion.

5. Procédé selon l'une quelconque des revendications précédentes, comprenant en outre les étapes consistant à :
alimenter un second four (152) avec le produit de sortie contenant le produit de carbonisation (122, 170) ;
activer le produit de sortie contenant le produit de carbonisation (122, 170) dans le second four (152) pour ainsi obtenir un produit intermédiaire (171) contenant du carbone activé et du gaz résiduaire (180) ;
évacuer au moins une partie du gaz résiduaire (180) du second four (152) en, en premier lieu, forçant la au moins une partie du gaz résiduaire (180) à travers le produit intermédiaire (171) pour ainsi obtenir un produit de sortie contenant du carbone activé (172) ; et
obtenir le produit de sortie contenant du carbone activé (172) du second four (152).

6. Procédé selon la revendication 5, dans lequel l'évacuation de la au moins partie du gaz résiduaire (180) consiste en outre à :
obtenir une réaction solide-gaz entre le gaz résiduaire (180) et le produit intermédiaire (171) contenant du carbone activé ;
sur la base de la réaction solide-gaz, briser des molécules dans le gaz résiduaire (180) pour ainsi obtenir un gaz résiduaire de sortie (181) ; et/ou,
dans lequel le produit de sortie contenant le produit de carbonisation (122, 170) contient de l'azote, et dans lequel la au moins une partie du gaz résiduaire (180) consiste en outre à :
obtenir une réaction solide-gaz entre l'azote dans le gaz résiduaire (180) et le produit intermédiaire (171) contenant du carbone activé ;
sur la base de la réaction solide-gaz, charger le produit intermédiaire (171) d'azote, pour ainsi obtenir un produit de sortie contenant du carbone activé (152) qui comporte en outre le carbone activé chargé d'azote.

7. Procédé selon l'une quelconque des revendications soit 5, soit 6, comprenant en outre l'étape consistant à :
amasser le produit intermédiaire (171) en une pile dans le second four (152) et évacuer le gaz résiduaire (18) à travers la pile ; et/ou
dans lequel le produit de sortie contenant le produit de carbonisation (122, 170) est obtenu à partir d'une alimentation d'entrée (151) à hauteur d'une première extrémité du second four (152) et le produit de sortie contenant du carbone activé (172) est obtenu à partir d'une alimentation de sortie (153) à hauteur d'une seconde extrémité du second four (152) ; et dans lequel le gaz résiduaire (180) est extrait à hauteur de la seconde extrémité ; facultativement ;
dans lequel le processus consiste en outre à :
au cours de l'activation, transférer le produit de sortie contenant le produit de carbonisation (122, 170) à partir de l'alimentation d'entrée (151) vers l'alimentation de sortie (153) du second four (152) lors de sa mise en oeuvre dans le produit intermédiaire (171) ; et
en amont de l'alimentation de sortie (153), amasser le produit intermédiaire (171) en face d'un trou de passage (158) situé entre le produit intermédiaire (171) et l'alimentation de sortie (153) ; et dans lequel la section transversale du trou de passage (158) est configurée de telle sorte que la pile recouvre le trou de passage (158) ; et
évacuer le gaz résiduaire (180) à travers le trou de passage (158) de façon à le faire passer de force à travers la pile ; et
collecter le produit de sortie contenant du carbone activé (172) à hauteur de l'alimentation de sortie (153) suite à son transfert à travers le trou de passage (158).

8. Procédé selon l'une quelconque des revendications 5 à 7, dans lequel le second four (152) est un four rotatif (152) ; facultativement,
comprenant en outre la combustion d'au moins une partie du gaz résiduaire de sortie (181) et la réalisation de l'activation par au moins une partie de la chaleur (159) que produit la combustion.

9. Procédé selon l'une quelconque des revendications 1 à 4, dans lequel le procédé comprend en outre un procédé de fabrication d'un carbone activé à partir d'un produit de sortie contenant le produit de carbonisation (122, 170) ; le procédé comprenant les différentes étapes suivantes consistant à :
alimenter un second four (152) avec le produit de sortie contenant le produit de carbonisation (122, 170) ;
activer le produit de sortie contenant le produit de carbonisation (122, 170) dans le second four (152), pour ainsi obtenir un produit intermédiaire (171) contenant du carbone activé et du gaz résiduaire (180) ;
évacuer au moins une partie du gaz résiduaire (180) du second four (152) en, en, en premier lieu, forçant la au moins une partie du gaz résiduaire (180) à travers le produit intermédiaire (171) pour ainsi obtenir un produit de sortie contenant du carbone activé (172) ; et
obtenir le produit de sortie contenant du carbone activé (172) du second four (152) ;
ledit procédé étant **caractérisé en ce que** :
le produit intermédiaire (171) est amassé en une pile en face d'un trou de passage (158) dans le second four (152) ;
la au moins une partie du gaz résiduaire évacué (180) passe par forçage à travers le produit intermédiaire empilé (171) ; et
l'évacuation de la au moins une partie du gaz résiduaire (180) consiste en outre à :
obtenir une réaction solide-gaz entre le gaz résiduaire (180) et le produit intermédiaire (171) contenant du carbone activé ;
sur la base de la réaction solide-gaz, briser des molécules dans le gaz résiduaire (180) pour ainsi obtenir un gaz résiduaire de sortie (181) ;
évacuer le gaz résiduaire de sortie (181) du second four (152).

10. Procédé selon la revendication 9, dans lequel le produit de sortie contenant le produit de carbonisation (122, 170) contient de l'azote, et dans lequel l'évacuation de la au moins une partie du gaz résiduaire (180) consiste en outre à :
obtenir une réaction solide-gaz entre l'azote dans le gaz résiduaire (180) et le produit intermédiaire (171) contenant du carbone activé ;
sur la base de la réaction solide-gaz, charger le produit intermédiaire (171) d'azote, pour ainsi obtenir le produit de sortie contenant du carbone activé (172) qui contient en outre le carbone activé chargé d'azote ; et/ou
dans lequel le produit de sortie contenant le produit de carbonisation (122, 170) est obtenu à partir d'une alimentation d'entrée (151) à hauteur d'une première extrémité du second four (152) et le produit de sortie contenant du carbone activé (172) est obtenu à partir d'une alimentation de sortie à hauteur d'une seconde extrémité du second four (152) , et dans lequel le gaz résiduaire (180) est extrait à hauteur de la seconde extrémité ; facultativement,
dans lequel le processus consiste en outre à :
au cours de l'activation, transférer le produit de sortie contenant le produit de carbonisation (122, 170) à partir de l'alimentation d'entrée (151) vers l'alimentation de sortie (153) du second four lors de sa mise en oeuvre dans le produit intermédiaire (171) ; et
en amont de l'alimentation de sortie (153), amasser le produit intermédiaire (171) en face d'un trou de passage (158) situé entre le produit intermédiaire et l'alimentation de sortie (171) ; et dans lequel la section transversale du trou de passage (158) est configurée de telle sorte que la pile recouvre le trou de passage (158) ; et
évacuer le gaz résiduaire (180) à travers le trou de passage (158) de façon à le faire passer de force à travers la pile ; et
collecter le produit de sortie contenant du carbone activé (172) à hauteur de l'alimentation de sortie suite à son transfert à travers le trou de passage (158).

11. Procédé selon l'une quelconque des revendications soit 9, soit 10, dans lequel le second four (152) est un four rotatif ; et/ou,
comprenant en outre la combustion d'au moins une partie du gaz résiduaire (181) et la réalisation de la carbonisation par au moins une partie de la chaleur (159) que produit la combustion.
